# EUROPÄISCHE PATENTSCHRIFT

(11) **EP 3 869 991 B1**
(45) Veröffentlichungstag und Bekanntmachung des Hinweises auf die Patenterteilung: **19.04.2023**
(21) Anmeldenummer: 19795131.2
(22) Anmeldetag: 17.10.2019
(51) Int. Cl.: A43B 7/14, A43B 7/32, A43B 23/08, A43B 23/17, A43B 23/26, B33Y 80/00

(54) **VERSTEIFUNGSELEMENT SOWIE VERFAHREN ZUR HERSTELLUNG EINES FUNKTIONALEN HYBRIDEN VERSTEIFUNGSELEMENTS**
REINFORCEMENT ELEMENT AND PROCESS FOR MANUFACTURING A FUNCTIONAL HYBRID REINFORCEMENT ELEMENT
ÉLÉMENT RAIDISSEUR ET PROCÉDÉ DE FABRICATION D'UN ÉLÉMENT RAIDISSEUR HYBRIDE FONCTIONNEL

(30) Priorität: 23.10.2018 DE 102018218115
(43) Veröffentlichungstag der Anmeldung: 01.09.2021
(73) Patentinhaber: Rhenoflex GmbH, 67065 Ludwigshafen (DE)
(72) Erfinder: BÖTTCHER, Frank, 42781 Haan (DE); JÄRGER, Henritte, 67259 Heuchelheim bei Frankenthal (DE)
(74) Vertreter: dompatent von Kreisler Selting Werner - Partnerschaft von Patent- und Rechtsanwälten mbB
(86) Internationale Anmeldenummer: PCT/EP2019/078288
(87) Internationale Veröffentlichungsnummer: WO 2020/083752

(56) Entgegenhaltungen:
- EP-A2- 0 222 220
- WO-A1-2012/059367
- DE-A1- 4 103 389
- US-A- 2 780 879
- US-A- 3 973 284

## Beschreibung

Die Erfindung betrifft ein Versteifungselement, das insbesondere für Schuhe, Taschen, orthopädische Anwendungen oder dergleichen geeignet ist. Ferner betrifft die Erfindung ein Verfahren zur Herstellung eines derartigen Versteifungselements.

Derartige Versteifungselemente können beispielsweise aus einem pulverförmigen Material hergestellt werden. Hierbei wird das Pulver mit Hilfe eines Schiebers oder einer Schablone, insbesondere bereits in eine gewünschte Endform gebracht. Durch Zuführen von Druck und/oder Wärme wird das Pulver miteinander verbunden, sodass ein entsprechendes Versteifungselement entsteht. Ein derartiges Verfahren ist insbesondere in EP 0 222 220 B1 sowie WO 2012/059367 beschrieben.

Ein Versteifungselement mit den Merkmalen des Oberbegriffs des Anspruchs 1, ist in DE 41 03 389 A1 beschrieben.

Insbesondere bei Versteifungselementen für Schuhe, insbesondere als Zehen durch eine Vorderkappe oder im Bereich der Fersen durch eine Hinterkappe, besteht der Wunsch, dass derartige Versteifungselemente unterschiedliche steife Bereiche aufweisen.

Aufgabe der Erfindung ist es, ein Versteifungselement zu schaffen, das unterschiedlich steife Bereiche aufweist.

Die Lösung der Aufgabe erfolgt erfindungsgemäß durch ein Versteifungselement gemäß Anspruch 1, und ein Verfahren zur Herstellung eines Versteifungselements gemäß Anspruch 8.

Das erfindungsgemäße Versteifungselement ist insbesondere für Schuhe, Taschen, orthopädische Anwendungen oder dergleichen geeignet. Bei Schuhen ist die Verwendung von aus unterschiedlichen Materialen hergestellten Versteifungselementen bekannt. Beispielsweise erfolgt ein Versteifen der Schuhe im Bereich der Fersen durch eine Hinterkappe oder auch durch eine Vorderkappe im Bereich der Zehen. Auch sind Versteifungselemente bei Schuhen im Bereich der Ösen für die Schnürsenkel bekannt, um ein Ausreißen zu vermeiden. Bei Taschen wie Handtaschen, Sporttaschen oder dergleichen sind derartige Versteifungselemente auch bei aus flexiblem Material hergestellten Taschen, beispielsweise in Ecken im Bereich einer Riemenbefestigung, Taschenböden und dergleichen vorgesehen.

Das erfindungsgemäße Versteifungselement weist eine Trägerschicht sowie eine Versteifungsschicht auf. Die Versteifungsschicht ist mit der Trägerschicht verbunden. Das Verbinden kann durch Vorsehen eines Klebstoffs erfolgen, wobei es bevorzugt ist, dass sich das Material der Trägerschicht und der Versteifungsschicht durch Zufuhr von Druck und/oder Wärme miteinander verbinden. Vorzugsweise sind daher die Materialen der Trägerschicht und der Versteifungsschicht derart ausgebildet, dass eine insbesondere thermische Verbindung möglich ist, sodass ein zusätzliches Vorsehen von Klebstoff nicht erforderlich ist. Insbesondere ist die Trägerschicht und die Versteifungsschicht aus demselben oder einem chemisch ähnlichen Material hergestellt.

Erfindungsgemäß ist die Trägerschicht derart ausgebildet, dass ein Randbereich entsteht, der zumindest teilweise seitlich über die Versteifungsschicht vorsteht. Hierdurch ist ein Versteifungselement ausgebildet, das in denjenigen Bereich, in dem die Trägerschicht und die Versteifungsschicht aufeinanderliegen, eine höhere Steifigkeit aufweist, als in dem Bereich, in dem ausschließlich die Trägerschicht angeordnet ist. Ferner ist es, insbesondere aufgrund der Verwendung von unterschiedlichen Materialien, Materialdichten und dergleichen möglich, die Steifigkeit der beiden Schichten zu variieren. Auch könnte ggf. eine dritte Schicht oder weitere Schichten vorgesehen werden, um eine weitere Zone mit unterschiedlicher Steifigkeit herzustellen. Des Weiteren wäre es möglich, mehrere Versteifungsschichten vorzusehen, die in unterschiedlichen Bereichen mit der Trägerschicht verbunden sind. Hierbei können die unterschiedlichen Versteifungsschichten in einem Abstand zueinander angeordnet sein, einander teilweise oder vollständig überdecken oder sich in Randbereichen berühren.

Besonders bevorzugt ist es, dass der durch die Trägerschicht ausgebildete Randbereich die Versteifungsschicht vollständig umgibt. Hierdurch entsteht ein umlaufender Randbereich geringerer Steifigkeit. Des Weiteren ist es bevorzugt, dass der Randbereich eine im wesentlichen konstante Breite aufweist, wobei die Breite hierbei um ±20%, insbesondere um ±10% schwankt.

In einem nicht zur Erfindung gehörenden Beispiel, können die Trägerschicht und/oder die Versteifungsschicht aus Rollen- und/oder Plattenmaterial hergestellt sein. Beispielsweise wird zunächst eine Rollenware hergestellt, aus der sodann entsprechende Platten geschnitten werden. Geeignete Materialien sind hierbei beispielsweise imprägnierte Materialien, die insbesondere mit Latex-Dispersionen imprägniert sein können und ggf. auf ein oder beiden Seiten mit einer Klebeschicht versehen sein können. Geeignet ist auch die Herstellung durch Extrudieren thermoplastischer Kunststoffe, die ggf. auch einen Füllstoff, wie Holzpulver, Recyclematerial oder dergleichen aufweisen können. Bei dem Herstellen der Trägerschicht und/oder der Versteifungsschicht aus derartigem Plattenmaterial erfolgt beispielsweise ein Ausstanzen oder Ausschneiden der entsprechenden Formteile zur Herstellung des Versteifungselements. Sofern die Trägerschicht und die Versteifungsschicht aus Plattenmaterial hergestellt sind, können diese sodann miteinander verklebt werden oder insbesondere durch Zufuhr von Wärme und Druck miteinander verbunden werden.

Die Trägerschicht und die Versteifungsschicht sind aus Pulver hergestellt. Hierdurch ist es beispielsweise möglich ein Pulver, beispielsweise mit Hilfe eines Schiebers und einer Schablone, bereits in der gewünschten Endform der Trägerschicht und/oder der Versteifungsschicht anzuordnen und durch Zufuhr von Druck und/oder Wärme das Pulver miteinander zu verbinden. Das Herstellen der Trägerschicht und/oder der Versteifungsschicht mit Hilfe von Pulver hat insbesondere den Vorteil, dass der Arbeitsschritt des Stanzens oder Ausschneidens der Trägerschicht und/oder der Versteifungsschicht aus plattenförmigem Material entfällt. Ferner hat ein Herstellen aus Pulver den Vorteil, dass kein Abfall entsteht. Bei einer besonders bevorzugten Ausführungsform ist es möglich, beispielsweise fehlerhaft hergestellte Elemente wieder zu zerkleinern, insbesondere zu mahlen und das Material erneut zu verwenden. Als entsprechendes Material ist insbesondere pulverförmiger thermoplastischer Kunststoff geeignet. Dieser kann beispielsweise durch vermahlen von Granulat hergestellt werden. Eine bevorzugte Pulvergrö-ße liegt im Bereich von 50 µm bis 900 µm, vorzugsweise 50 µm bis 600 µm geeignet. Ein geeignetes Herstellungsverfahren ist insbesondere in EP 0 222 220 B1 sowie WO 2012/059367 beschrieben.

Das Kunststoffmaterial kann ggf. einen Füllstoff, wie beispielweise Polykarbonat, PET oder andere Füllstoffe aufweisen.

Selbstverständlich kann auch eine aus Pulver im vorstehend beschriebenen Verfahren hergestellte Versteifungsschicht und/oder Trägerschicht durch Schneiden oder Stanzen in die Endform gebracht werden. Gegebenenfalls kann eine geringe Nachbearbeitung, wie ein Säubern der Kanten, zweckmäßig sein.

Des Weiteren ist es möglich die Trägerschicht und/oder die Versteifungsschicht durch ein 3-D-Druckverfahren herzustellen. Hierbei sind insbesondere das FDN-Verfahren aber auch das SLS-Verfahren geeignet. Hierbei sind wiederum Kombination unterschiedlich hergestellter Trägerschichten und Versteifungsschichten möglich. Hierbei können insbesondere beide Schichten mit demselben vorstehenden Verfahren hergestellt sein, wobei es auch möglich ist, die beiden Schichten durch unterschiedliche Verfahren herzustellen und nach dem Vorsehen des Speicherelements zwischen den beiden Schichten nach und/oder während des Herstellungsverfahrens miteinander zu verbinden. Besonders bevorzugt ist es, dass auf einer aus Pulver hergestellten Trägerschicht eine Versteifungsschicht unmittelbar im 3D-Druckverfahren aufgedruckt wird.

Die Versteifungsschicht muss nicht flächig ausgebildet sein, sondern kann beispielsweise auch eine Gitterstruktur aufweisen.

Bei einer bevorzugten Weiterbildung des erfindungsgemäßen Versteifungselements ist auf einer Außenseite der Trägerschicht und/oder der Versteifungsschicht ein Klebefilm vorgesehen. Bei der Außenseite handelt es sich um diejenige Seite der Trägerschicht und/oder der Versteifungsschicht, die nach Verbinden der beiden Innenseiten der Trägerschicht und/oder der Versteifungsschicht außen angeordnet ist. Das Vorsehen eines Klebefilms auf zumindest einer der beiden Außenseiten hat den Vorteil, dass hierdurch ein gutes Verbinden des Versteifungselements mit einem Überzugmaterial oder einer weiteren Materialschicht möglich ist. Hierbei handelt es sich beispielsweise um das Material des Schuhs oder der Tasche, d.h. beispielsweise einer Lederschicht, einer Textilgewebeschicht oder dergleichen.

Anstelle des Vorsehens eines Klebefilms ist es je nach verwendeten Material auch möglich, ein Verkleben durch thermisches Aktivieren der Außenseite der Trägerschicht und/oder der Versteifungsschicht zu realisieren.

Ein zur Herstellung des vorstehend beschriebenen Versteifungselements istinsbesondere zur Herstellung von Versteifungselementen für Schuhe, Taschen, orthopädische Anwendungen und dergleichen geeignet. Es erfolgt ein Verbinden einer Versteifungsschicht mit einer Trägerschicht. Diese sind, wie vorstehend anhand des Versteifungselements beschrieben, aus entsprechenden Materialien hergestellt. Ferner handelt es sich bei der Versteifungsschicht und/oder der Trägerschicht vorzugsweise um aus Plattenmaterial oder unmittelbar aus Pulver hergestellte Schichten.

Die Herstellung der Trägerschicht und der Versteifungsschicht erfolgt erfindungsgemäß derart, dass ein Randbereich ausgebildet wird. Der Randbereich wird derart ausgebildet, dass die Trägerschicht zumindest teilweise seitlich über die Versteifungsschicht vorsteht. Entsprechend der vorstehend beschriebenen bevorzugten Ausführungsform des Versteifungselements ist es bevorzugt, dass die Herstellung derart erfolgt, dass der Randbereich die Versteifungsschicht vollständig umgibt. Ferner ist es möglich, dass der Randbereich eine im wesentlichen konstante Breite aufweist, wobei die Breite hierbei vorzugsweise um weniger als ± 20%, insbesondere weniger als ± 10% variiert. Auch gemäß des erfindungsgemäßen Verfahrens können ein oder mehrere zusätzliche Schichten vorgesehen werden. Auch können mehrere Versteifungsschichten vorgesehen werden, die beispielsweise in einem Abstand zueinander angeordnet sind, einander überdecken und/oder deren Ränder sich berühren.

In einem nicht zur Erfindung gehörenden Beispiel, kann die Herstellung des Versteifungselements derart erfolgen, dass eine großflächige, insbesondere rollenförmige Trägerschicht vorgesehen wird. Auf diese Trägerschicht wird sodann partiell eine Versteifungsschicht angeordnet. Durch Verbinden der beiden Schichten erfolgt somit ein rollenförmiges Material, mit an vorgegebenen Stellen angeordneten Versteifungsschichten. Hieran anschließend können Versteifungselemente ausgestanzt werden, sodass Versteifungselemente ausgebildet sind, bei denen die Trägerschicht derart ausgebildet ist, dass sie zur Ausbildung eines Randbereichs zumindest teilweise seitlich über die Versteifungsschicht vorsteht. Das Austanzen, Ausschneiden oder dergleichen der Versteifungselemente kann unmittelbar nach der Herstellung des Rollenmaterials erfolgen, sodass die entsprechenden Versteifungselemente an einen Kunden, der diese beispielsweise zur Herstellung von Schuhen, Taschen oder orthopädischen Anwendungen oder dergleichen verwendet, gesandt werden. Ebenso kann das Ausstanzen oder Ausschneiden der Versteifungselemente auch durch den Kunden selbst erfolgen, sodass dem Kunden Rollenmaterial zugesandt wird. Des Weiteren ist es möglich, dass Rollenmaterial derart zu schneiden, dass plattenförmiges Material entsteht. Die Platten können sodann wiederum an den Kunden versandt werden, der aus dem plattenförmigen Material die entsprechenden Versteifungselemente beispielsweise durch Ausstanzen oder Ausschneiden herstellt. Bei einer besonders bevorzugten Verwendung von Pulverpartikeln erfolgt die Herstellung des Versteifungselements vorzugsweise derart, dass die Pulverpartikel zumindest im Wesentlichen in einer Endform einer Außenkontur der Trägerschicht und/oder der Versteifungsschicht in einer Schicht angeordnet werden. Anschließend kann eine gesonderte Herstellung der Trägerschicht und der Versteifungsschicht durch Einbringen von Temperatur und/oder Druck erfolgen. Es liegen sodann zwei gesonderte Elemente, d.h. die Trägerschicht und die Versteifungsschicht vor. Diese können im nächsten Schritt sodann an ihren Innenseiten miteinander verbunden werden.

Besonders bevorzugt ist es, Pulver für eine Trägerschicht anzuordnen, jedoch die Pulverpartikel noch nicht miteinander zu verbinden. Hieran anschließend wird das Pulver für die Versteifungsschicht aufgebracht. Anschließend erfolgt ein Verbinden des Pulvers, durch Zuführen von Temperatur und/oder Druck.

Nachfolgend wird die Erfindung anhand bevorzugter Ausführungsformen unter Bezugnahme auf die anliegenden Zeichnungen näher erläutert.

Es zeigen:
- Figur 1: eine schematische Ansicht einer ersten Ausführungsform zur Herstellung eines erfindungsgemäßen Versteifungselements,
- Figur 2: eine schematische Ansicht einer zweiter Ausführungsform eines erfindungsgemäßen Versteifungselements,
- Figur 3: eine schematische Ansicht einer dritten Ausführungsform zur Herstellung eines erfindungsgemäßen Versteifungselements.
- Figur 4: eine schematische Ansicht einer vierten Ausführungsform zur Herstellung eines erfindungsgemäßen Versteifungselements.

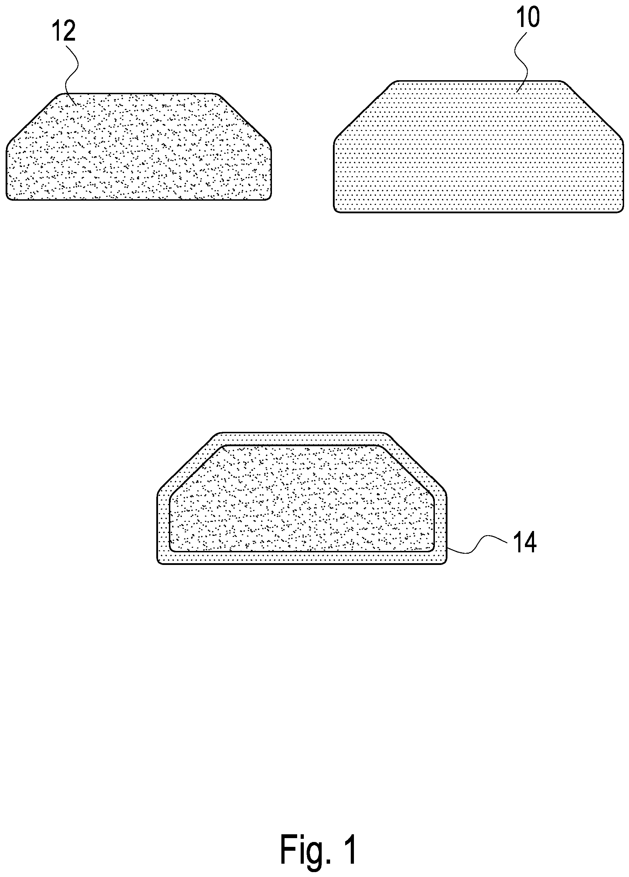

Bei einer erfindungsgemäßen Ausführungsform (Figur 1) erfolgt das Herstellen einer Trägerschicht 10 einer der Versteifungsschicht 12 aus pulverförmigem Material. Hierbei sind unterschiedliche Vorgehensweisen möglich. Beispielsweise können die Trägerschicht 10 und die Versteifungsschicht 12 fertiggestellt werden, sodass diese bereits in ihrer Endform vorhanden und durch Zufuhr von Temperatur und/oder Druck miteinander verdichten oder verbunden sind. Die Verbindung der Trägerschicht 10 mit der Versteifungsschicht 12 kann durch Temperaturen und/oder Druck erfolgen. Dies ist insbesondere möglich, wenn die beiden Schichten aus miteinander kompatiblen Pulvermaterialien hergestellt sind.

Alternativ kann die Trägerschicht 10, die aus Pulver hergestellt ist, fertiggestellt werden und sodann Pulver für die Versteifungsschicht 12auf der Innenseite der Trägerschicht 10 angeordnet werden. Anschließend erfolgt ein Verdichten bzw. Verbinden des Pulvers der Versteifungsschicht durch Zuführen von Temperatur und/oder Druck.

Besonders bevorzugt ist es, das Pulver der Trägerschicht 10 noch nicht miteinander zu verbinden bzw. zu verdichten sondern zunächst Pulver für die Versteifungsschicht 12 auf der Trägerschicht 10 partiell vorzusehen. Anschließend erfolgt sodann ein gemeinsames Verbinden bzw. Verdichten des Pulvers der Trägerschicht 10 sowie der Versteifungsschicht 12 durch Zuführen von Temperatur und/oder Druck.

In dem in Figur 1 dargestellten Ausführungsbeispiel ist die Versteifungsschicht 12 derart auf der Trägerschicht 10 die größere aufweist angeordnet, dass hierdurch ein umlaufender Randbereich 14 ausgebildet ist. Der Randbereich 14 weist in dem in Figur 1 dargestellten Ausführungsbeispiel eine im wesentlichen konstante Breite auf und umgibt die Versteifungsschicht vollständig.

In einem nicht zur Erfindung gehörenden Beispiel ist die Trägerschicht 10 aus einem Plattenmaterial hergestellt. Hierbei weist die Trägerschicht 10 beispielsweise bereits die endgültige Außenkontur auf, wobei diese beispielsweise durch Schneiden oder Stanzen hergestellt wurde. Gegebenenfalls kann das Herstellen der Außenkontur auch als letzter Herstellungsschritt erfolgen. Anschließend erfolgt das partielle Aufbringen des pulverförmigen Materials zur Ausbildung der Versteifungsschicht 12. Gegebenenfalls kann die Innenseite zur Sicherstellung einer zuverlässigen Verbindung zwischen Trägerschicht 10 und Versteifungsschicht 12 mit einem Haftvermittler beschichtet werden. Nach Anordnen des Pulvers der Versteifungsschicht 12 auf der Innenseite der Trägerschicht 10 erfolgt wiederum ein Zuführen von Temperatur und/oder Druck zur Herstellung der Versteifungsschicht. Hierbei ist es besonders bevorzugt, dass eine unmittelbare Verbindung der Versteifungsschicht 12 mit der Trägerschicht 10 erfolgt, sodass kein Vorsehen von Haftvermittler erforderlich ist.

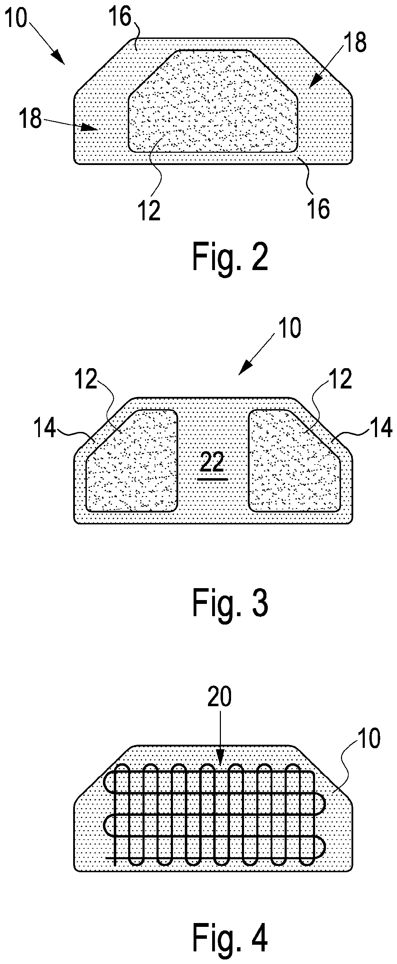

In den Figuren 2 und 3 sind alternative weitere bevorzugte Ausführungsformen des erfindungsgemäßen Versteifungselements dargestellt, wobei ähnliche und identische Bauteile mit denselben Bezugszeichen gekennzeichnet sind.

In Figur 2 ist mit der Trägerschicht 10 eine Versteifungsschicht 12 verbunden, wobei wiederum ein vollständig um die Versteifungsschicht 12 umlaufender Randbereich vorgesehen ist. Der Randbereich weist hierbei einerseits an einer Ober- und einer Unterseite einen relativ schmalen Randbereich 16 und seitlich zwei breitere Randbereiche 18 auf. Die Randbereiche 18 können hierbei beispielsweise die seitlichen Bereiche einer Fersenkappe ausbilden, sodass eine gut und zuverlässige Verbindung mit dem Schuhmaterial gewährleistet ist.

In Figur 2 sind auf der Trägerschicht 10 zwei Versteifungsschichten 12 angeordnet. Die Anordnung erfolgt in einem Abstand zueinander, sodass in einem Zwischenbereich 18 nur eine Lage der Trägerschicht 10 vorhanden ist. Seitlich sind die beiden Versteifungsschichten 12 jeweils wiederum von einem Randbereich 14 umgeben.

Gegebenenfalls kann die Trägerschicht 10 und/oder die Versteifungsschicht 12 auch durch ein 3-D-Druckverfahren, insbesondere ein FDM-Verfahren oder ein SLS-Verfahren hergestellt werden, wobei auch Kombinationen der unterschiedlichen Herstellungsverfahren möglich sind.

Wie in dem in Figur 4 dargestellten Ausführungsbeispiel gezeigt, kann auf der Trägerschicht 10 auch eine gitterförmig ausgebildete Versteifungsschicht 20 vorgesehen sein. Diese kann gesondert hergestellt sein oder insbesondere in einem 3D-Druckverfahren unmittelbar auf der Oberseite der Trägerschicht 12 angeordnet werden.

## Patentansprüche

1. Versteifungselement, insbesondere für Schuhe, Taschen oder orthopädische Anwendungen, mit
einer Trägerschicht (10), und
einer mit der Trägerschicht (10) flächig verbundenen Versteifungsschicht (12),
wobei die Trägerschicht (10) zur Ausbildung eines Randbereichs (14, 16, 18) zumindest teilweise seitlich über die Versteifungsschicht (12) vorsteht
**dadurch gekennzeichnet, dass**
wobei die Trägerschicht (10) und die Versteifungsschicht (12) aus unterschiedlichen, pulverförmigen Materialien hergestellt sind.

2. Versteifungselement nach Anspruch 1 **dadurch gekennzeichnet, dass** der Randbereich (14, 16, 18) die Versteifungsschicht (12) vollständig umgibt.

3. Versteifungselement nach Anspruch 1 oder 2 **dadurch gekennzeichnet, dass** der Randbereich (14, 16, 18) eine im wesentlichen konstante Breite aufweist.

4. Versteifungselement nach einem der Ansprüche 1 bis 3 **dadurch gekennzeichnet, dass** eine Außenkontur der Trägerschicht (10) und/oder der Versteifungsschicht (12) durch Stanzen und/oder Schneiden hergestellt ist.

5. Versteifungselement nach einem der Ansprüche 1 bis 4 **dadurch gekennzeichnet, dass** eine Außenkontur der Trägerschicht und/oder der Versteifungsschicht (12) unmittelbar bei der Herstellung erzeugt wird.

6. Versteifungselement nach einem der Ansprüche 1 bis 5 **dadurch gekennzeichnet, dass** auf einer Außenseite (18) der Trägerschicht (10) und/oder der Versteifungsschicht (12) eine Klebeschicht (20) vorgesehen ist.

7. Versteifungselement nach einem der Ansprüche 1 bis 6 **dadurch gekennzeichnet, dass** die Versteifungsschicht (12) im 3D-Druckverfahren hergestellt ist.

8. Verfahren zur Herstellung eines Versteifungselements nach einem der Ansprüche 1 bis 7, insbesondere für Schuhe, Taschen oder orthopädische Anwendungen, bei welchem
eine Versteifungsschicht (12) mit einer Trägerschicht (10) derart verbunden und ein Randbereich (14, 16, 18) ausgebildet wird, sodass die Trägerschicht (10) zumindest teilweise seitlich über die Versteifungsschicht (12) vorsteht
wobei die Trägerschicht (10) und die Versteifungsschicht (12) aus pulverförmigem Material hergestellt wird, wobei die Herstellung der Trägerschicht (10) und der Versteifungsschicht (12) gemeinsam erfolgt.

9. Verfahren zur Herstellung eines Versteifungselements, nach Anspruch 8, bei welchem der Randbereich (14, 16, 18) die Versteifungsschicht (12) vollständig umgibt.

10. Verfahren zur Herstellung eines Versteifungselements, nach einem der Ansprüche 8 oder 9, bei welchem der Randbereich (14) eine im wesentlichen konstante Breite aufweist.

11. Verfahren zur Herstellung eines Versteifungselements, nach einem der Ansprüche 8 bis 10, bei welchem Pulverpartikel zumindest im Wesentlichen in einer Endform einer Außenkontur der Trägerschicht (10) und/oder der Versteifungsschicht (12) in einer Schicht angeordnet werden.

12. Verfahren zur Herstellung eines Versteifungselements, nach Anspruch 11, bei welchem auf der Trägerschicht (10) aus Pulverpartikeln eine Schicht Pulverpartikel zur Ausbildung der Versteifungsschicht (16) angeordnet wird.

13. Verfahren zur Herstellung eines Versteifungselements, nach Anspruch 8 bis 12, bei welchem die Pulverpartikel insbesondere durch Zufuhr von Wärme und/oder Druck miteinander verbunden werden.

14. Verfahren zur Herstellung eines Versteifungselements, nach Anspruch 8 bis 13, bei welchem die Herstellung der Trägerschicht (10) und/oder der Versteifungsschicht (12) gesondert erfolgt und die Trägerschicht (10) mit der Versteifungsschicht (12) miteinander verbunden werden.

15. Verfahren zur Herstellung eines Versteifungselements, nach einem der Ansprüche 8 bis 14, bei welchem die Versteifungsschicht (12) auf der Trägerschicht (10) angeordnet wird, indem eine Schicht Pulverpartikel aufgebracht wird.

16. Verfahren zur Herstellung eines Versteifungselements, nach einem der Ansprüche 8 bis 15, wobei die Versteifungsschicht (12) im 3D-Druckverfahren vorzugsweise unmittelbar auf der Trägerschicht (10) hergestellt wird.

## Claims

1. Reinforcing element, in particular for shoes, bags or orthopedic applications, comprising
a support layer (10), and
a reinforcing layer (12) surface-connected with the support layer (10),
wherein the support layer (10) protrudes at least in parts laterally beyond the reinforcing layer (12) to form an edge region (14, 16, 18),
**characterized in that**
the support layer (10) and the reinforcing layer (12) are produced from different powdery materials.

2. Reinforcing element of claim 1, **characterized in that** the edge region (14, 16, 18) surrounds the reinforcing layer (12) completely.

3. Reinforcing element of claim 1 or 2, **characterized in that** the edge region (14, 16, 18) has a substantially constant width.

4. Reinforcing element of one of claims 1 to 3, **characterized in that** an outer contour of the support layer (10) and/or the reinforcing layer (12) is obtained by punching and/or cutting.

5. Reinforcing element of one of claims 1 to 4, **characterized in that** an outer contour of the support layer and/or the reinforcing layer (12) is obtained directly during manufacture.

6. Reinforcing element of one of claims 1 to 5, **characterized in that** an adhesive layer (20) is provided on an outer side (18) of the support layer (10) and/or the reinforcing layer (12).

7. Reinforcing element of one of claims 1 to 6, **characterized in that** the reinforcing layer (12) is produced in a 3D printing method.

8. Method for producing a reinforcing element of one of claims 1 to 7, in particular for shoes, bags or orthopedic applications, in which
a reinforcing layer (12) is connected with a support layer (10) and an edge region (14, 16, 16) is formed such that the support layer (10) protrudes at least in part laterally beyond the reinforcing layer (12),
wherein the support layer (10) and/or the reinforcing layer (12) are made from a powdery material, wherein the support layer (10) and the reinforcing layer (12) are produced together.

9. Method for producing a reinforcing element of claim 8, in which the edge region (14, 16, 18) surrounds the reinforcing layer (12) completely.

10. Method for producing a reinforcing element of one of claims 8 to 9, in which the edge region (14) has a substantially constant width.

11. Method for producing a reinforcing element of one of claims 8 to 10, in which powder particles are arranged in one layer at least substantially in the final shape of an outer contour of the support layer (10) and/or the reinforcing layer (12).

12. Method for producing a reinforcing element of claim 11, in which a layer of powder particles for forming the reinforcing layer (16) is arranged on the support layer (10) formed by powder particles.

13. Method for producing a reinforcing element of claim 8 to 12, in which the powder particles are compounded in particular by applying heat and/or pressure.

14. Method for producing a reinforcing element of one of claims 8 to 13, in which the support layer (10) and/or the reinforcing layer (12) are produced separately and the support layer (10) is connected with the reinforcing layer (12).

15. Method for producing a reinforcing element of one of claims 8 to 14, in which the reinforcing layer (12) is arranged on the support layer (10) by depositing a layer of powder particles.

16. Method for producing a reinforcing element of one of claims 8 to 15, in which the reinforcing layer (12) is produced preferably directly on the support layer (10) using a 3D printing method.

## Revendications

1. Élément raidisseur, en particulier pour des chaussures, des sacs ou des applications orthopédiques, comprenant
une couche de support (10), et
une couche de raidissement (12) reliée de manière planaire à la couche de support (10),
la couche de support (10) faisant saillie de manière latérale au moins partiellement par rapport à la couche de raidissement (12) afin de former une région de bord (14, 16, 18)
**caractérisé en ce que**
la couche de support (10) et la couche de raidissement (12) sont produites à partir de matériaux en poudre différents.

2. Élément raidisseur selon la revendication 1, **caractérisé en ce que** la région de bord (14, 16, 18) entoure complètement la couche de raidissement (12).

3. Élément raidisseur selon la revendication 1 ou 2, **caractérisé en ce que** la région de bord (14, 16, 18) présente une largeur essentiellement constante.

4. Élément raidisseur selon l'une quelconque des revendications 1 à 3, **caractérisé en ce qu'**un contour extérieur de la couche de support (10) et/ou de la couche de raidissement (12) est produit par estampage et/ou découpe.

5. Élément raidisseur selon l'une quelconque des revendications 1 à 4, **caractérisé en ce qu'**un contour extérieur de la couche de support et/ou de la couche de raidissement (12) est généré directement lors de la production.

6. Élément raidisseur selon l'une quelconque des revendications 1 à 5, **caractérisé en ce qu'**une couche adhésive (20) est prévue sur une face extérieure (18) de la couche de support (10) et/ou de la couche de raidissement (12).

7. Élément raidisseur selon l'une quelconque des revendications 1 à 6, **caractérisée en ce que** la couche de raidissement (12) est produite grâce à un procédé d'impression 3D.

8. Procédé de production d'un élément raidisseur selon l'une quelconque des revendications 1 à 7, en particulier pour des chaussures, des sacs ou des applications orthopédiques, selon lequel
une couche de raidissement (12) est reliée à une couche de support (10) de telle manière, et une région de bord (14, 16, 18) est formée de telle sorte, que la couche de support (10) fait saillie de manière latérale au moins partiellement par rapport à la couche de raidissement (12),
la couche de support (10) et la couche de raidissement (12) étant produites à partir d'un matériau en poudre, la production de la couche de support (10) et de la couche de raidissement (12) intervenant de manière conjointe.

9. Procédé de production d'un élément raidisseur selon la revendication 8, selon lequel la région de bord (14, 16, 18) entoure complètement la couche de raidissement (12).

10. Procédé de production d'un élément raidisseur selon l'une quelconque des revendications 8 ou 9, selon lequel la région de bord (14) présente une largeur essentiellement constante.

11. Procédé de production d'un élément raidisseur selon l'une quelconque des revendications 8 à 10, selon lequel des particules de poudre sont agencées en une couche au moins essentiellement sous la forme finale d'un contour extérieur de la couche de support (10) et/ou de la couche de raidissement (12).

12. Procédé de production d'un élément raidisseur selon la revendication 11, selon lequel une couche de particules de poudre est agencée sur la couche de support (10) constituée de particules de poudre afin de former la couche de raidissement (16).

13. Procédé de production d'un élément raidisseur selon l'une quelconque des revendications 8 à 12, selon lequel les particules de poudre sont liées entre elles en particulier grâce à un apport de chaleur et/ou de pression.

14. Procédé de production d'un élément raidisseur selon l'une quelconque des revendications 8 à 13, selon lequel la production de la couche de support (10) et/ou de la couche de raidissement (12) intervient de manière séparée et la couche de support (10) est reliée à la couche de raidissement (12).

15. Procédé de production d'un élément raidisseur selon l'une quelconque des revendications 8 à 14, selon lequel la couche de raidissement (12) est agencée sur la couche de support (10) par application d'une couche de particules de poudre.

16. Procédé de production d'un élément raidisseur selon l'une quelconque des revendications 8 à 15, selon lequel la couche de raidissement (12) est produite grâce à un procédé d'impression 3D de manière préférée directement sur la couche de support (10).
